# DEMANDE DE BREVET EUROPEEN

(11) **EP 1 256 504 A2**
(43) Date de publication de la demande: **13.11.2002**
(21) Numéro de dépôt: 02356086.5
(22) Date de dépôt: 07.05.2002
(51) Int. Cl.: B62B 1/26

(54) **Appareil pour le transport d'éléments volumineux et de faible densité**

(30) Priorité: 09.05.2001 FR 0106337
(71) Demandeur: Micieli, Vincenzo, 42160 Saint Cyprien (FR)
(72) Inventeur: Micieli, Vincenzo, 42160 Saint Cyprien (FR)

(57) **Abrégé**

Cet appareil pour le transport d'éléments volumineux et de faible densité, tels que feuilles mortes, tonte de gazon ou éléments de couchages, comprend une structure porteuse (A) en forme de diable avec roulettes, large pelle avant (8), brancard arrière (4) et, en partie supéricure, deux bras parallèles et horizontaux (10), saillants au dessus de la pelle et aptes à pénétrer dans des ourlets (17) ménagés sur les bords supérieurs de deux (13a, 13b) des parois latérales opposées d'un sac parallélépipédique de collecte (B).

Selon l'invention, le sac (B) est réalisé dans une nappe résistante permettant sa réutilisation et la formation des ourlets supérieurs et présente, dans sa paroi verticale antérieure (14), un panneau (14a), rabattable au moins partiellement pour dégager une ouverture frontale, de chargement et de déchargement, les bords de ce panneau (14a) étant liés aux bords juxtaposés, de la paroi antérieure (14) ou des parois verticales voisines (13a, 13b,) par des moyens de liaison dissociables (18).

## Description

L'invention est relative à un appareil pour le transport d'éléments volumineux et de faible densité, tels que feuilles mortes, herbes sèches, tontes de gazon, éléments de couchages.

Actuellement, le transport des feuilles mortes après leur ramassage pose problème au jardinier amateur qui ne dispose, en général, que d'une brouette standard conçue pour le transport de produits pulvérulents et lourds, et non pour le transport de produits légers, foisonnants et pouvant s'envoler sous l'action du vent.

Le recours à des sacs poubelles de grande contenance résout partiellement le problème du transport, mais crée un autre problème : celui du remplissage du sac par une bouche non rigide nécessitant une tierce personne pour la tenir ouverte pendant que la collecte est déversée par brassée.

Par les documents US 3 491 973, DE-A 297 02 166, et FR-A 2 620 994, on connaît des collecteurs à déchets, comprenant une structure porteuse en forme de diable avec roulettes, brancard arrière et, au moins une paire de bras parallèles et horizontaux, saillants vers l'avant ou sur le coté et aptes à pénétrer dans des ouvertures ou ourlets ménagés dans ou sur les bords supérieurs de deux des parois latérales opposées d'un sac parallélépipédique de réception des déchets. Si ces appareils apportent une solution au maintien en position ouverte de l'ouverture du sac, ils ne sont pas immédiatement transposables à la collecte des déchets de jardin en raison de leur faible contenance exigeant leur remplacement fréquent. De plus, lors du remplissage du sac, ils obligeraient l'utilisateur à élever la charge jusqu'à l'embouchure du sac, même quand le sac est en début de remplissage, ce qui aurait pour conséquences d'augmenter inutilement le fatigue du jardinier et, surtout, en l'obligeant à élever la charge, à favoriser la dispersion de celle-ci autour de l'embouchure, par exemple quand celle ci est composée de feuilles mortes.

La présente invention a pour objet d'aménager ce type d'appareil afin qu'il facilite non seulement la collecte et le transport d'éléments volumineux de faible densité,tels que les déchets de jardin, mais aussi le chargement et le déchargement du sac qu'il supporte.

A cet effet, dans l'appareil selon l'invention le sac est réalisé dans une nappe résistante, permettant sa réutilisation et la réalisation d'ourlets dans deux de ses bord opposés, et présente, dans sa paroi verticale antérieure, un panneau rabattable au moins partiellement pour dégager une ouverture frontale, de chargement et de déchargement, les bords de ce panneau étant liés aux bords juxtaposés, de la paroi antérieure ou des parois verticales voisines par des moyens de liaison dissociables .

Lorsque le sac est mis en place sur la structure porteuse par emmanchement de ses ourlets sur les bras de la structure en prenant soin que son fond repose sur la pelle de ladite structure, l'opération de remplissage s'effectue par l'ouverture frontale. Dans cette position, le chargement des feuilles ou autres éléments volumineux et légers, est très aisé, sans qu'il y ait lieu d'avoir recours à une tierce personne puisque, par sa pelle reposant sur le sol, la structure porteuse est parfaitement stable, par ses bras elle maintien le sac et que, par la présence du panneau antérieur d'obturation il est possible de refermer l'ouverture frontale au fur et à mesure du remplissage du sac, en limitant ainsi le soulèvement de la charge à la hauteur juste nécessaire pour le déversement dans le sac.

Dans une forme d'exécution, les moyens de liaison du panneau antérieur avec les bords des panneaux voisins sont constitués par des fermetures à glissière s'ouvrant du haut vers le bas.

Ainsi, l'ouverture frontale est ménagée dans le sac en faisant glisser les fermetures à glissière du haut vers le bas, sensiblement jusqu'à mi-hauteur. Quand la moitié du sac est remplie, les fermetures à glissière sont avancées vers le haut progressivement, au fur et à mesure du chargement, jusqu'à leur fin de course, cas dans lequel la paroi avant obture totalement l'ouverture frontale, qu'elle dégageait jusqu'alors.

Lorsque le sac est chargé il est très aisément transportable par la structure porteuse jusqu'à un point de déchargement ou jusqu'à une zone où le sac est séparé de cette structure, par exemple pour être amené par un autre moyen de transport vers une décharge ou une déchetterie.

Dans une forme d'exécution, le sac comporte un volet supérieur de fermeture muni de moyens de liaison aptes à coopérer avec des moyens de liaison complémentaires ménagés près du bord supérieur du panneau avant de ce sac.

Ce volet, qui évite que les objets collectés dans le sac puissent s'en échapper, est particulièrement intéressant dans le cas où le sac doit être séparé de sa structure porteuse pour être transporté.

Avantageusement, chacune des parois latérales du sac est munie d'une sangle transversale formant poignée de portage.

Ces poignées facilitent la mise en place et l'extraction du sac par rapport à la structure de portage, mais facilitent également son transport.

L'invention sera mieux comprise à l'aide de la description qui suit en référence au dessin schématique annexé représentant, à titre d'exemple, une forme d'exécution de l'appareil selon l'invention.
Figure 1 est une vue perspective d'une forme d'exécution de la structure porteuse,
Figure 2 est une vue en perspective d'une forme d'exécution du sac selon l'invention,
Figure 3 est une vue de côté, en coupe longitudinale, montrant un sac mis en place sur la structure porteuse et lorsqu'il est associé à des sacs complémentaires.
Figure 4 est une vue de face en élévation d'une variante de réalisation du sac.

L'appareil selon l'invention est donc composé d'une structure porteuse A et d'un sac B.

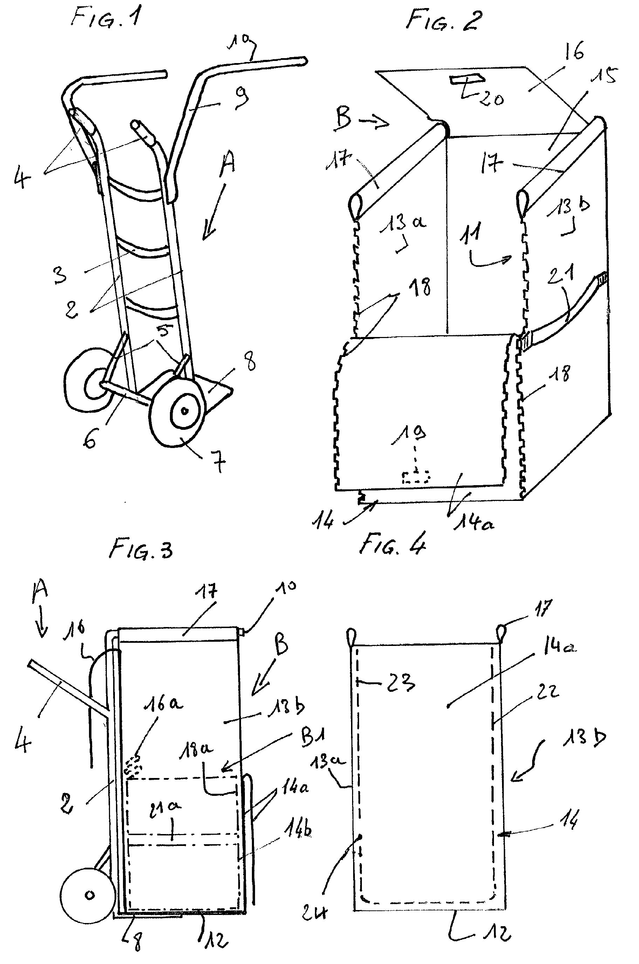

La structure porteuse A a la forme générale d'un diable, comme montré à la figure 1, c'est-à-dire est composée de deux montants 2, reliés par des traverses 3, et solidaires chacun, en partie supérieure, d'un retour coudé 4 formant brancard tourné vers l'arrière et, en partie inférieure, d'un gousset triangulaire 5 supportant un axe transversal 6 pour deux roues 7. Les montants sont solidaires d'une pelle 8 saillant vers l'avant.

Les montants 2 sont également solidaires, par soudure, vissage ou emmanchement dans des fourreaux latéraux, de consoles 9 disposées sensiblement dans leur plan. Chacune de ces consoles est solidaire d'un bras 10 qui est horizontal et en saillie vers l'avant. Dans la forme d'exécution représentée, correspondant à un appareil pour la collecte de déchets de jardin foisonnants, tels que des feuilles mortes, les bras 10 sont à un plus haut niveau par rapport au sol que les poignées du brancard 4 et ceci afin de permettre l'augmentation de la hauteur et donc de la contenance du sac.

Comme montré à la figure 2, chaque sac B est parallélépipédique et est composé d'un fond 12, visible figure 3, de deux parois latérales et verticales 13a, 13b, d'une paroi antérieure 14, d'une paroi postérieure 15, et dans la forme d'exécution représentée, d'un volet supérieur 16. Ces différents éléments sont réalisés dans une nappe résistante, telle que toile, nappe en matière plastique, tissu enduit et par exemple toile à bâche.

Chacun des deux panneaux latéraux 13a, 13b est muni, sur son bord supérieur, d'un ourlet tubulaire 17 qui, continu ou discontinu, est apte à être emmanché sur le bras respectif 10 de la structure porteuse A, comme le montre la figure 3. La hauteur du sac est telle que, lorsque les ourlets 17 sont mis en place sur les bras 10, le fond 12 du sac repose sur la pelle 8 de la structure porteuse A.

Dans une variante non représentée, l'appui du fond 12 sur la pelle 8 est renforcé par un panneau rigide disposé sur ou sous le fond 12 du sac.

Selon l'invention le sac B présente dans sa paroi antérieure 14 une ouverture 11 qui est obturable par un panneau rabattable 14a. Dans la forme représentée le panneau 14a est constitué par la totalité de la paroi 14, mais dans d'autres formes de réalisation il peut être plus petit que cette paroi pourvu qu'il facilite le remplissage du sac et son déchargement.

Les bords longitudinaux du panneau antérieur 14a sont reliés aux bords longitudinaux des parois latérales 13a et 13b par des moyens de liaison dissociables, tels que boutons pression, rubans de velours à bouclettes et à crochets, boutons, ou, comme représentée, par des fermetures à glissière 18 s'ouvrant du haut vers le bas.

Le bord supérieur du panneau avant 14a est équipé d'un moyen de liaison 19, complémentaire d'un moyen 20 ménagé à proximité du bord antérieur du volet supérieur 16. Les moyens 18 et 19 peuvent être, par exemple, un tronçon de ruban de velours à bouclettes coopérant avec un tronçon de velours à crochets.

Enfin, chacune des parois latérales 13a, 13b est munie contre sa face extérieure d'une sangle 21 s'étendant transversalement et dont les extrémités sont liées au panneau par des coutures 22. Ces sangles forment des poignées de portage.

Lorsque le sac B est mis en place sur la structure porteuse A, son panneau antérieur 14a est partiellement ouvert par actionnement des fermetures à glissière 18. La figure 3 montre que, pour éviter que le panneau 14a frotte par terre, ce dernier est rabattu à mi-hauteur, mais il est évident que ce rabattement peut s'effectuer plus bas ou plus haut en fonction des besoins du remplissage. Ainsi, lors du ramassage de feuilles mortes, le rabattement à mi-hauteur convient parfaitement, tandis que, pour le remplissage de bûches disposées longitudinalement, le panneau 14 peut être rabattu beaucoup plus bas.

Au fur et à mesure du remplissage du sac B, les fermetures à glissière 18 sont progressivement fermées. Dans cette configuration l'ensemble structure A - sac B peut être déplacé sur l'aire de collecte, sans difficultés et sans perte des éléments ramassés.

Quand le sac est plein, il peut aisément être déplacé par la structure A du lieu de ramassage vers un lieu de déversement ou vers un lieu de prélèvement. Pour ce dernier cas, le volet 16 est rabattu sur l'ouverture supérieure du sac et est verrouillé par coopération des moyens 20 qu'il porte avec ceux 19 de la paroi antérieure 14, et cela préalablement à l'extraction des ourlets 17 hors des bras 10 par coulissement vers l'avant. On notera que ce coulissement est facilité par la présence des deux poignées latérales 21.

Sur le lieu de déchargement, le sac peut être vidé uniquement par son ouverture supérieure ou progressivement par son ouverture frontale 11, crée par déplacement des fermetures à glissière 18 libérant son panneau antérieur 14.

Dans une forme d'exécution, et pour faciliter le transport de produits ayant une plus grande densité, pulvérulents ou non, et par exemple l'herbe de tonte d'un gazon, l'appareil est associé à des sacs complémentaires qui, comme montré en B1 à la figure 3, ont une hauteur qui est un sous multiple de la hauteur totale du sac B et ont une section transversale qui est homothétique à celle du sac B, mais plus petite en dimensions, de manière à pouvoir être engagés aisément dans ce sac. Chacun des sacs complémentaires B1 est muni de poignées latérales 21a, d'un volet supérieur rabattable 16a, et, éventuellement, d'une paroi antérieure 14b, dont les bords sont liés aux panneaux latéraux par des fermetures à glissière 18a s'ouvrant du haut vers le bas et s'étendant au moins sur la partie supérieure de ces bords.

Lorsqu'un sac complémentaire B1 est rempli, son volet 16a est rabattu pour obturer son ouverture supérieure et il est posé sur lui un autre sac B1 dont le remplissage est facilité par abaissement de son panneau antérieur 14b. Après remplissage de deux ou plusieurs sacs complémentaires B1 superposés dans le sac principal B, le panneau antérieur 14a de ce sac principal est refermé, de manière à permettre le déplacement de l'ensemble.

Ces sacs complémentaires B1, et éventuellement le sac B, peuvent être réalisés en matériau biodégradable ou en tout autre matériau peu onéreux permettant de les jeter lorsqu'ils sont remplis.

Pour faciliter le déchargement mais aussi le chargement, et comme montré figure 4, les moyens de liaison du panneau antérieur 14a avec les bords juxtaposés des parois voisines 12, 13a, 13b sont répartis sur deux lignes de séparation 22 et 23 formant un U, à savoir une ligne de séparation rectiligne 23, entre le panneau 14a et la paroi 13a, et une ligne de séparation 22 en forme de J qui est rectiligne près de la paroi 13b, est coudée, près du fond 12, est rectiligne le long de ce fond 12, est coudée et remonte sur l'autre paroi 13a par une portion rectiligne et verticale. Cette dernière est soit séparée de la ligne de séparation 23, pour former un pont 24 de liaison permanente,comme représenté figure 4, soit communique avec cette ligne 23 pour permettre l'extraction complète du panneau 14a.

L'appareil, qui a été décrit dans le cas de son application au ramassage des feuilles mortes ou de la tonte de gazon, peut également être utilisé pour la collecte de tout autre produit volumineux et à faible masse spécifique, et par exemple pour la collecte des éléments de couchages dans les hôpitaux.

Lorsque le sac principal B est retiré de la structure porteuse A, celle-ci peut être utilisée, par ses bras 10, pour constituer enrouleur de tuyaux d'arrosage, et par sa pelle 8 comme un diable traditionnel pour le transport de sacs, de bûches, d'une bouteille de gaz, d'un bac floral,...

## Revendications

1. Appareil pour le transport d'éléments volumineux et de faible densité, tels que feuilles mortes, tonte de gazon ou éléments de couchages, comprenant une structure porteuse (A) en forme de diable avec roulettes, large pelle avant (8), brancard arrière (4) et, en partie supérieure, deux bras parallèles et horizontaux (10), saillants au dessus de la pelle et aptes à pénétrer dans des ourlets (17) ménagés sur les bords supérieurs de deux (13a, 13b) des parois latérales opposées d'un sac parallélépipédique de collecte (B), **caractérisé en ce que** le dit sac est réalisé dans une nappe résistante permettant sa réutilisation et la formation des ourlets supérieurs et présente, dans sa paroi verticale antérieure (14), un panneau (14a), rabattable au moins partiellement pour dégager une ouverture frontale, de chargement et de déchargement, les bords de ce panneau (14a) étant liés aux bords juxtaposés, de la paroi antérieure (14) ou des parois verticales voisines (13a, 13b,) par des moyens de liaison dissociables (18).

2. Appareil selon la revendication 1, **caractérisé en ce que** les moyens de liaison du panneau antérieur (14a) avec les bords des parois verticales voisines (14 ou 13a, 13b) sont constitués par des fermetures à glissière (18) s'ouvrant du haut vers le bas.

3. Appareil selon la revendication 1, **caractérisé en ce que** le panneau antérieur (14a) est également lié à la paroi de fond (12) du sac par des moyens de liaison dissociables, tels qu'une fermeture à glissière (18).

4. Appareil selon la revendication 3 **caractérisé en ce que** les moyens de liaison du panneau antérieur (14a) avec les bords juxtaposés des parois voisines (12, 13a, 13b) sont répartis sur deux lignes de séparation (22 et 23) formant un U, à savoir une ligne de séparation rectiligne (23) et une ligne de séparation (22) en forme de J qui passe près du fond (12) et remonte sur l'autre paroi (13b, 13a) et qui, soit est séparée de la ligne de séparation (23), pour former un pont (24) de liaison permanente, soit communique avec cette ligne (23) pour permettre l'extraction complète du panneau (14a).

5. Appareil selon la revendication 1, **caractérisé en ce que** le sac (B) comporte un volet supérieur de fermeture (16) muni de moyens de liaison (20) aptes à coopérer avec des moyens de liaison complémentaires (19) ménagés près du bord supérieur du panneau antérieur (14a) de ce sac.

6. Appareil selon la revendication 1, **caractérisé en ce que** chacune des parois latérales (13a, 13b) du sac est munie d'une sangle transversale (21) formant poignée de portage.

7. Appareil selon la revendication 1, **caractérisé en ce qu'**il comprend aussi des sacs complémentaires (B1) dont la hauteur est un sous multiple de celle du sac principal (B) et dont la section transversale est homothétique, mais inférieure à celle du sac principal (B), de façon à pouvoir être introduits dans ce sac, empilés au fur et à mesure de leur remplissage, puis extraits par l'ouverture antérieure.

8. Appareil selon la revendication 7, **caractérisé en ce que** chaque sac complémentaire (B1) est muni de poignées latérales (21a), d'un volet supérieur rabattable (16a), et d'un panneau antérieur rabattable (14b) dont les bords sont liés aux parois voisines par des fermetures à glissière (18a) s'ouvrant du haut vers le bas et s'étendant au moins sur la partie supérieure de ces parois.

9. Appareil selon la revendication 7, **caractérisé en ce qu'**au moins chaque sac complémentaire (B1) est jetable et réalisé dans une nappe en matériau biodégradable.
